Europäisches Patentamt

European Patent Office

Office européen des brevets

(19)

(11) Veröffentlichungsnummer: **0 457 120 A1**

## (12) EUROPÄISCHE PATENTANMELDUNG

(21) Anmeldenummer: 91107153.8

(22) Anmeldetag: 03.05.91

(51) Int. Cl.5: **C01B 17/90, C22B 34/12, C01G 23/053**

(30) Priorität: 15.05.90 DE 4015538

(43) Veröffentlichungstag der Anmeldung:
21.11.91 Patentblatt 91/47

(84) Benannte Vertragsstaaten:
**BE DE ES FR GB IT NL**

(71) Anmelder: **BAYER AG**

**W-5090 Leverkusen 1 Bayerwerk(DE)**

(72) Erfinder: **Lailach, Günter**
**Bismarckstrasse 109**
**W-4150 Krefeld(DE)**
Erfinder: **Gerken, Rudolf**
**Rather Strasse 79**
**W-4150 Krefeld-Traar(DE)**
Erfinder: **Wiese, Jürgen**
**Doerperhofstrasse 39**
**W-4150 Krefeld 1(DE)**

(54) **Verfahren zum Herstellen von Titandioxid.**

(57) Die vorliegende Erfindung betrifft ein Verfahren zum Herstellen von Titandioxid nach dem Sulfatverfahren durch Aufschluß von Titanrohstoffen mit einem Gemisch aus frischer und rezirkulierter Schwefelsäure, Hydrolyse des dabei gebildeten Titanylsulfats unter Bildung von Titanoxidhydrat und Dünnsäure, Kalzinieren des Titanoxidhydrats zu Titandioxid und Wiedergewinnung der Schwefelsäure aus der Dünnsäure durch Eindampfen und Abtrennen der festen Metallsulfate.

EP 0 457 120 A1

Die Erfindung betrifft ein Verfahren zum Herstellen von Titandioxid nach dem Sulfatverfahren durch Aufschluß von Titanrohstoffen mit einem Gemisch aus frischer und rezirkulierter Schwefelsäure, Hydrolyse des dabei gebildeten Titanylsulfats unter Bildung von Titanoxidhydrat und Dünnsäure, Kalzinieren des Titanoxidhydrats zu Titandioxid und Wiedergewinnung der Schwefelsäure aus der Dünnsäure durch Eindampfen und Abtrennen der festen Metallsulfate.

Für die Wiedergewinnung von Schwefelsäure aus Dünnsäuren und die ökologisch akzeptable Beseitigung der abgetrennten Metallsulfate wurden mehrere Verfahren vorgeschlagen.

Nach US 3.210.156 wird verhältnismaßig reine 93-95 %ige Schwefelsäure aus Dünnsäure zurückgewonnen, wobei die abgetrennten Metallsulfate durch thermische Spaltung in Metalloxide und $SO_2$ überführt werden, Aus dem $SO_2$ kann dann reine Schwefelsäure hergestellt werden. Die Dünnsäure wird hier auf 55 bis 70 % $H_2SO_4$ aufkonzentriert, bevor die Metallsulfate abgetrennt werden, Dieses ökologisch sinnvolle Verfahren ist jedoch durch hohe Anlagen-und Betriebskosten ökonomisch kaum tragbar.

Ein wirtschaftlich vorteilhafteres Verfahren bietet EP-A 133.505, insbesondere in Kombination mit DE-A 2.529.708, EP-A 97.259 und DE-A 3.537.941. Danach wird die Dünnsäure unter Ausnutzung von Prozeßabwärme in mehreren Stufen auf 62-70 % $H_2SO_4$ (gerechnet als salzfreie Säure) eingedampft, die Suspension in einer Rührkaskade abgekühlt und die noch gelöste Metallsulfate enthaltende 62-70 %ige Schwefelsäure durch Filtration von den festen Metallsulfaten getrennt. Der Filterkuchen wird thermisch gespalten. Die als Filtrat abgetrennte Schwefelsäure wird bedarfsweise weiter auf 70 bis 85 % $H_2SO_4$ eingedampft (z.B. gemäß EP-A 97.259) und ohne vorherige Abtrennung der dabei eventuell kristallisierenden Metallsulfate beim Titanrohstoffaufschluß wieder eingesetzt (DE-A 3.537.941 oder DE-A 3.513.120).

Auch in der DE-A 2 618 121 wird die Dünnsäure auf einen Gehalt von 60-70 % $H_2SO_4$ eingedampft, bevor die ausgefallenen Metallsulfate abgetrennt werden.

Bei der Durchführung dieser ökologisch vorteilhaften und auch ökonomisch akzeptablen Verfahrenskombinationen traten unerwartete Probleme auf, insbesondere wenn Titanschlacke oder eine Kombination von Titanschlacke und wenig Ilmenit als Titanrohstoff eingesetzt wurde und gleichzeitig ein hoher Aufarbeitungsgrad der Dünnsäure erforderlich war.

Entgegen jeder Erwartung traten bei der weiteren Konzentrierung der 62-70 %igen Säure (z.B. gemäß EP-A 97 259 oder DE-A 3 537 941) Probleme durch Abscheidung von Magnesiumsulfaten während der Eindampfung und durch überraschend hohe Viskosität der gekühlten Suspension auf. Außerdem kristallisierte Magnesiumsulfat beim Lagern von 62-70 %iger Säure aus.

Anscheinend verbleibt gelöstes Magnesiumsulfat in höheren Konzentrationen in der von den festen Metallsulfaten abgetrennten 62-70 %igen Schwefelsäure als erwartet und als seiner Löslichkeit unter den gegebenen Bedingungen entspricht.

Aufgabe war es daher, ein Verfahren zur Verfügung zu stellen, das es gestattet, Dünnsäure ökologisch und gleichzeitig ökonomisch akzeptabel aufzuarbeiten und die Nachteile der bekannten Verfahren zu vermeiden, insbesondere die Übersättigung an gelöstem Magnesiumsulfat in der durch Eindampfen der Dünnsäure erzeugten Metallsulfat-Schwefelsäure-Suspension und damit die Anreicherung von Magnesiumsulfat in dem weitgehend geschlossenen Kreislaufsystem bestehend aus Titanrohstoffaufschluß, Titanylsulfathydrolyse, Schwefelsäurerückgewinnung aus Dünnsäure und Wiederverwendung der rückgewonnenen Schwefelsäure beim Titanrohstoffaufschluß.

Die Aufgabe konnte überraschenderweise durch das erfindungsgemäße Verfahren gelöst werden.

Gegenstand der Erfindung ist ein Verfahren zur Herstellung von Titandioxid nach dem Sulfatverfahren durch Aufschluß von Titanrohstoffen mit einem Gemisch aus frischer und rezirkulierter Schwefelsäure, Hydrolyse des dabei gebildeten Titanylsulfates unter Bildung von Titanoxidhydrat und Dünnsäure, Kalzinieren des Titanoxidhydrates zu Titandioxid und Wiedergewinnung der Schwefelsäure aus der Dünnsäure durch Eindampfen und Abtrennen der festen Metallsulfate und Wiederverwendung der abgetrennten Schwefelsäure, gegebenenfalls nach weiterer Eindampfung, beim Titanrohstoffaufschluß, wobei die bei der Titanylsulfathydrolyse anfallende Dünnsäure auf eine Konzentration von 73 Gew.-% bis 85 Gew.-% $H_2SO_4$ (gerechnet als salzfreie Säure) gebracht wird und die dabei anfallenden festen Metallsulfate abgetrennt werden.

Bevorzugt wird die bei der Titanylsulfathydrolyse anfallende Dünnsäure auf 75-82 Gew.-% $H_2SO_4$ (gerechnet als salzfreie Säure) aufkonzentriert.

Besonders bevorzugt wird die aufkonzentrierte Schwefelsäure vor Abtrennung der Metallsulfate auf eine Temperatur von 40-65 ° C abgekühlt.

In einer besonderen Verfahrensvariante werden die ausgefallenen festen Metallsulfate durch Filtration von der aufkonzentrierten Schwefelsäure abgetrennt.

Trotz der Löslichkeitsminima der Metallsulfate in Schwefelsäure bei Konzentrationen zwischen 50 und 70 Gew.-% $H_2SO_4$ werden die Metallsulfate überraschenderweise aus 73-85 Gew.-% Schwefelsäure optimal abgeschieden und können leicht abfiltriert werden. Auch das Magnesiumsulfat wird im erfindungsgemäßen Verfahren optimal ausgefällt.

Die mit einem Gehalt von 62-70 Gew.-% nach dem Stand der Technik anfallende und von den Metallsulfaten abgetrennte Schwefelsäure könnte zwar prinzipiell weiter auf eine Konzentration von 73-85 Gew.-% $H_2SO_4$ eingedampft, abgekühlt und filtriert werden, jedoch ergeben sich bei dieser Vorgehensweise erhebliche Nachteile. Insbesondere fallen bei der weiteren Konzentration auf 73-85 Gew.-% $H_2SO_4$ äußerst feinteilige Metallsulfate an, die nur schwer filtrierbar sind und eine hohe Restfeuchte aufweisen.

Besonders bevorzugt ist eine Verfahrensvariante, bei der die bei der Titanylsulfathydrolyse anfallende Dünnsäure in einer Stufe oder vorteilhaft in mehreren Stufen auf eine Konzentration von 73-85 Gew.-%, vorzugsweise 75-82 Gew.-% $H_2SO_4$ - (gerechnet als salzfreie Säure) ohne vorherige Abtrennung der Metallsulfate eingedampft wird, die dabei erzeugte Suspension in einer Rührkaskade auf 40-65°C abgekühlt wird, die Schwefelsäure von den festen Metallsulfaten abgetrennt wird und die abgetrennte Schwefelsäure, gegebenenfalls nach weiterer Eindampfung, beim Rohstoffaufschluß wiederverwendet wird.

Die Erfindung soll anhand der folgenden Beispiele näher erläutert und die Vorteile des erfindungsgemäßen Verfahrens gegenüber dem Stand der Technik verdeutlicht werden.

Alle Angaben in Prozent sind Gewichtsprozente soweit nicht anders beschrieben.

Beispiel 1 (Vergleichsbeispiel)

Beim Aufschluß von Titanschlacke und einer geringen Menge Ilmenit fiel eine Dünnsäure an, die 25,2 % $H_2SO_4$, 2,0 % Fe-, 0,36 % Al-, 0,73 % Mg-, 0,27 % Ti-Ionen sowie ca. 0,2 % weitere Metallionen (wie Mn, Ca, Cr, V) enthielt.

Diese Dünnsäure wurde unter Ausnutzung von Prozeßabwärme auf einen Gehalt von 28,3 % $H_2SO_4$ eingedampft und anschließend durch mehrstufige Vakuumverdampfung so weit konzentriert, daß eine Suspension von Metallsulfaten in 67,7 %iger Schwefelsäure (gerechnet als salzfreie Säure) resultierte.

Die Suspension wurde in einer 7-stufigen Rührkaskade während 38 h von 90°C auf 56°C abgekühlt und anschließend filtriert. Als Filtrat fiel eine klare grüne Lösung an, die 63,9 % $H_2SO_4$ - (entsprechend 67,7 % als salzfreie Säure), 0,09 % Fe-, 0,36 % Al-, 0,60 % Mg-und 0,018 % Ti-Ionen sowie 0,07 % weitere Metallionen enthielt.

Aus dieser als Konzentrat I bezeichneten, zurückgewonnenen Schwefelsäure kristallisierte bei Raumtemperatur während mehrerer Wochen ein MgSO4-haltiger Niederschlag.

Zwecks Wiederverwendung beim Titanrohstoffaufschluß wurde das Konzentrat I gemäß EP 97.259 unter Ausnutzung des Wärmeinhaltes der Abgase aus der $TiO_2$-Kalzinierung bis zu einer Konzentration von 82 % $H_2SO_4$ (gerechnet als salzfreie Säure) eingedampft. Dabei schied sich Magnesiumsulfat bevorzugt in kälteren Rohrleitungen und besonders an den Wärmeaustauschflächen des Säurekühlsystems ab, weshalb der Prozeß etwa wöchentlich zwecks Spülung unterbrochen werden mußte.

Die auf ca. 50°C gekühlte und als Konzentrat II bezeichnete Suspension sehr feinteiliger Metallsulfate, insbesondere Magnesiumsulfat, in 82 %iger Schwefelsäure erforderte infolge ihrer hohen Viskosität und ihrer thixotropen Eigenschaften besondere Maßnahmen bei der Wiederverwendung beim Titanrohstoffaufschluß.

Beispiel 2

Dünnsäure der gleichen Zusammensetzung wie in Beispiel 1 wurde analog mittels Prozeßwärme auf einen Gehalt an 28,3 % $H_2SO_4$ eingedampft.

Die Vakuumeindampfung erfolgte jedoch bis zu einer Konzentration von 75,2 % $H_2SO_4$ (als salzfreie Säure), die Abkühlung der resultierenden Suspension während 41 h in der 7-stufigen Rührkaskade.

Die bei der Filtration erhaltene klare grüne Schwefelsäure (Konzentration I) enthielt 72,3 % $H_2SO_4$ (entsprechend 75,2 % als salzfreie Säure), 0,12 % Fe-, 0,34 % Al-, 0,26 % Mg- und 0,017 % Ti-Ionen, sowie 0,06 % weitere Metallionen.

Die Eindampfung des Konzentrats I gemäß EP 97.259 auf 82 % $H_2SO_4$ (als salzfreie Säure gerechnet) verlief problemlos. Die Wärmeaustauscher, mit denen Konzentrat II von 175°C auf ca. 50°C gekühlt wurde, mußten nur alle 1-2 Monate gespült werden, Die Viskosität des gekühlten Konsentrats II war so gering, daß bei der Förderung und der Wiederverwendung beim Titanrohstoffaufschluß keine Probleme auftraten.

**Patentansprüche**

1. Verfahren zur Herstellung von Titandioxid nach dem Sulfatvefahren durch Aufschluß von Titanrohstoffen mit einem Gemisch aus frischer und rezirkulierter Schwefelsäure, Hydrolyse des dabei gebildeten Titanylsulfats unter Bildung von Titanoxidhydrat und Dünnsäure, Kalzinieren des Titanoxidhydrats zu Titandioxid, Wiedergewinnung der Schwefelsäure aus der Dünnsäure durch Eindampfen und Abtrennen der festen Metallsulfate und Wiederverwendung der abgetrennten Schwefelsäure, gegebenenfalls nach weiterer Eindampfung, beim Titanrohstoffaufschluß, dadurch gekennzeichnet, daß die bei der Titanylsulfathydrolyse anfallende Dünnsäure auf eine Konzentration von 73-85 Gew.-% $H_2SO_4$ (gerechnet als salzfreie Säure) gebracht wird und die dabei anfallenden festen Metallsulfate abgetrennt werden.

2. Verfahren gemäß Anspruch 1, dadurch gekennzeichnet, daß die bei der Titanylsulfathydrolyse anfallende Dünnsäure auf 75 bis 82 Gew.-% $H_2SO_4$ (gerechnet als salzfreie Säure) aufkonzentriert wird.

3. Verfahren gemäß einem der Ansprüche 1 oder 2, dadurch gekennzeichnet, daß die aufkonzentrierte Schwefelsäure vor Abtrennung der Metallsulfate auf eine Temperatur von 40 bis 65 °C abgekühlt wird.

4. Verfahren gemäß einem der Ansprüche 1 bis 3, dadurch gekennzeichnet, daß die festen Metallsulfate durch Filtration abgetrennt werden.

5. Verfahren gemäß einem oder mehreren der Ansprüche 1 bis 4, dadurch gekennzeichnet, daß die Dünnsäure in einer oder mehreren Stufen ohne vorherige Abtrennung der festen Metallsulfate auf eine Konzentration von 73-85 Gew.-% $H_2SO_4$, vorzugsweise 75 bis 82 Gew.-% $H_2SO_4$ (gerechnet als salzfreie Säure) eingedampft wird, die dabei erzeugte Suspension in einer Rührkaskade auf 40-65 °C abgekühlt wird, die Schwefelsäure von den festen Metallsulfaten abgetrennt wird und die abgetrennte Schwefelsäure, gegebenenfalls nach weiterer Eindampfung, beim Titanrohstoffaufschluß wiederverwendet wird.

Europäisches
Patentamt

**EUROPÄISCHER
RECHERCHENBERICHT**

Nummer der Anmeldung

**EP 91 10 7153**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 362 428 (KRONOS TITAN) <br> * Seite 12, Zeilen 6-10; Seite 7, Zeilen 22-25 * <br> — — — | 1-5 | C 01 B 17/90 <br> C 22 B 34/12 <br> C 01 G 23/053 |
| A | EP-A-0 302 337 (BAYER) <br> * Seite 4, Anspruch 1; Seite 3, Zeilen 3-6 * <br> — — — | 1-5 | |
| A,D | EP-A-0 133 505 (BAYER) <br> * Seite 15, Zeilen 1-14; Seite 10 * <br> — — — | 5 | |
| A | EP-A-0 194 544 (BAYER) <br> * Zusammenfassung * <br> — — — — — | 1-5 | |
| | | | **RECHERCHIERTE SACHGEBIETE (Int. Cl.5)** <br><br> C 01 B <br> C 01 G |

Der vorliegende Recherchenbericht wurde für alle Patentansprüche erstellt

| Recherchenort | Abschlußdatum der Recherche | Prüfer |
|---|---|---|
| Den Haag | 08 August 91 | LIBBERECHT-VERBEECK |